# EUROPEAN PATENT SPECIFICATION

(11) **EP 2 727 952 B1**
(45) Date of publication and mention of the grant of the patent: **01.11.2017**
(21) Application number: 12804427.8
(22) Date of filing: 28.06.2012
(51) Int. Cl.: C08G 81/00, C08G 63/91, C08B 31/00, C08L 87/00, C08L 67/00, C08L 67/04, C08L 67/02, C08L 3/02

(54) **THERMOPLASTIC STARCH, BIODEGRADABLE POLYESTER/STARCH COMPOSITE MATERIAL AND PREPARATION METHOD THEREOF**
WÄRMEHÄRTENDE STÄRKE, BIOLOGISCH ABBAUBARES POLYESTER/STÄRKE-VERBUNDMATERIAL UND VERFAHREN ZU SEINER HERSTELLUNG
AMIDON THERMOPLASTIQUE, MATÉRIAU COMPOSITE POLYESTER BIODÉGRADABLE/AMIDON ET SON PROCÉDÉ DE PRÉPARATION

(30) Priority: 30.06.2011 CN 201110182095
(43) Date of publication of application: 07.05.2014
(73) Proprietor: Shanghai Zaihe Industrial Investment Co., Ltd, Shanghai 201802 (CN)
(72) Inventor: HOU, Lianlong, Wuxi Jiangsu 214101 (CN)
(74) Representative: Wilson, Justin Scott
(86) International application number: PCT/CN2012/077750
(87) International publication number: WO 2013/000421

(56) References cited:
- WO-A1-95/24447
- WO-A1-2007/012142
- WO-A1-2010/138081
- WO-A1-2010/140041
- CN-A- 102 321 249
- US-A1- 2006 111 511

## Description

### Technical Field

The present invention relates to a novel biodegradable material and a preparation method thereof. The present invention relates in particular to preparation of a thermoplastic starch by using biodegradable polyester prepolymer as carrier, and formation of a novel biodegradable composite material by composition of the thermoplastic starch, biodegradable polyester and additives; the biodegradable composite material is applicable to processing of films, sheets, profiles, injection molding and containers, etc.

### Background

Biodegradable composite materials are considered as one of the effective ways to solve the problem of "white pollution", this is because they can be degraded by microorganisms into carbon dioxide and water in a composting plant, and this has a quite small effect on environment and reduces the treatment cost. In addition, the matrixes in these biodegradable materials, e.g. polyhydroxyalkanoates (PHAs), polylactic acid (PLA) and starch, are derived from renewable resources, which offsets the consumption of nonrenewable resources and lowers emission of greenhouse gases to a certain extent.

Typically, these biodegradable composite materials can be produced by mixing starch with biodegradable polymers, e.g. PHAs, PLA, polycaprolactone (PCL), poly(butylenes succinate)(PBS), poly(butylene succinate-co-butylene adipate) (PBSA) and poly(butylene adipate-co-terephthalate) (PBAT), etc.; under the condition of an extrusion process, i.e. at the presence of a fixed amount of water or plasticizer or some fillers, TPS is prepared at a temperature that is high enough, and then, the mixture of the TPS, the biodegradable polymer and/or the fillers and additives is extruded to obtain the finished degradable composite material particles.

Because of its low price and significant abundance, natural starch is commonly used in preparing the aforementioned biodegradable composite materials. However, this starch is hydrophilic, and has extremely strong intramolecular synergy due to hydrogen bond interaction generated by a large number of hydroxyls on its particle surfaces, suggesting its low possibility of plasticization. Furthermore, the natural starch has a higher melting point than thermal decomposition temperature, leading to its poor thermal processability. In general, water is added for starch plasticization, and the procedure of high-temperature plasticization will also cause starch degradation so as to result in worse performances.

At present, on condition of a degradable polymer serving as carrier, the natural starch is converted into TPS mainly by starch modification at the presence of water/plasticizer according to the existing extrusion process.

In most cases, due to its crispness and water sensitivity, starch can be applied only after being blended with other biodegradable polymers, especially with biodegradable polyesters, e.g. polylactic acid, PBS(A) and PBAT, and meanwhile, the cost of biodegradable materials can be reduced. However, most of the polyesters are hydrophobic, while starch and TPS are relatively hydrophilic, thereby causing severe phase separation and extraordinarily poor performances of the resultant blend. In case of ensuring no significant performance degradation, formation of the starch/polyester blend is difficult. On the other hand, most of the biodegradable polyesters are much more expensive than traditional plastic products. All these factors place a limitation on further application and development of the aforementioned biodegradable materials.

To solve the problems above, the method and process that are commonly used at present are as follows: a graft copolymer of starch and/or polyester is prepared and then added to a starch/polyester blending system, and this system is compatibilized and modified using the graft copolymer. One direction of this process lies in: preparation of modified starch. Starch is acetylated or esterified to prepare starchacetate, starch is carbonylated by isocyanate, inorganic acid ester like phosphate ester or nitrate ester is added to prepare the inorganic acid ester of starch, and starch is modified by epoxy chloropropane to prepare hydroxypropylated starch ether, etc. These reactions are basically hydroxylation on the starch, in order to lower the plasticization temperature of materials, reduce the degradation and improve the performances. In addition, maleic anhydride, sodium trimetaphosphate, epoxy chloropropane and the like are further added to prepare crosslinked starch under radiation conditions, but this method is unsuitable for extrusion process. The other direction of this process is that: the graft copolymer of starch and polyester matrix is formed through graft polyester matrixes, such as maleic anhydride, methyl acrylate, glycidyl methacrylate and glucose, in order to improve the phase structure of the blending system and further improve the material performances. The typical procedure of this process is as follows: grafted biodegradable polyester is prepared at first and then added to starch for blending. Finally, the resultant blend is melt-blended with TPS (starch/glycerol/water, etc.) in an extruder to obtain the finished composite material. Many developments and applications regarding preparation of starch and biodegradable polyester using the above method to form the corresponding composite materials have been realized in both technique and market aspects. For example: European patent applications: EP0947559B1, EP2074176B1; International patent application publications: WO1994/003543A1, WO1996/031561A1, WO2005/116118A1, WO2006/355505A2, WO2007/012142A1, WO2008/011668A1; US patents: US5844023, US5874486, US6235815B1, US6348524B2, US7153354B2, US7176251B1, US20070129468A1; and Chinese patents: CN200810046032.X, CN200810234967.0, CN200610128416.7, CN03117398.5, CNO1138290.2, CN97181071.2, CN93104044.2 and CN92101580.1, etc.

However, some shortcomings are present in the aforementioned technical method. One of them is that: since the high-molecular-weight component-polymer serves as carrier in the preparation process of TPS, the mobility of the polymer carrier is poor even under a high-temperature processing condition, which arouses inhomogeneous dispersion of starch in the carrier and relatively large particles, thus, the resultant TPS is poor in performances. Good dispersion cannot be achieved during preparation of the composite material, the performances are dramatically degraded while the cost is lowered, and the applicable range becomes smaller. Moreover, adoption of the high-temperature processing condition will also lead to coking and degradation of the starch as well as thermal degradation of the polyester, etc.

A more serious shortcoming is a great difficulty in ensuring that sufficient active terminal groups are introduced to effectively improve the compatibility among the components of the composite material and to increase the mechanical properties and processability to facilitate processing by traditional processes and equipment. In addition, the existence of acids and water will accelerate and induce adverse side reactions, especially acidolysis of ester bonds. Thus, the stability of both the TPS and the corresponding composite material are largely affected, and their mechanical properties are degraded.

In conclusion, this field is short of a thermoplastic starch (TPS) with superior performances and a thermoplastic starch (TPS)-containing composite material with stable performances. Therefore, there is an urgent need in this field to find a composite material with better mechanical properties, better processability and excellent hydrolysis resistance and a thermoplastic starch for achieving the aforementioned performances.

### Summary of the Invention

An object of the present invention is to obtain a thermoplastic starch (TPS) with superior performances.

A second object of the present invention is to obtain a preparation method of the thermoplastic starch (TPS) with superior performances.

A third object of the present invention is to obtain a thermoplastic starch (TPS)-containing composite material with stable performances.

A fourth object of the present invention is to obtain a preparation method of the thermoplastic starch (TPS)-containing composite material with stable performances.

In the first aspect of the present invention, it provides a thermoplastic starch as defined in claim 1; the thermoplastic starch (TPS) comprises the following components:
20-80 parts of starch;
5-40 parts of biodegradable polyester prepolymer; the prepolymer has a molecular weight of 10,000-100,000 Daltons, a viscosity range of 0.30-1.2 dL/g, which is measured by an Ubbelohde viscometer method, and a melting point range of 60-180°C; and the terminal reactive group content of the prepolymer is 1.0-20.0 meq/Kg, which is measured by an terminal group titration process;
0.01-10 parts of reaction activator;
0.01-1.0 part of catalytic deactivator;
0.01-1.0 part of antioxidant; and
5-50 parts of plasticizers.
In one embodiment, the antioxidant is a phosphite antioxidant, a hindered phenol antioxidant and a complex antioxidant of the both, including: trialkyl phosphite, mixed alkyl/aryl phosphate, alkyl aryl phosphate, sterically hindered aryl phosphate, aliphatic spirophosphite, sterically hindered diphosphonate, hydroxyphenyl propionate and mixtures thereof.

More specifically, the plasticizers are environment-friendly ones, including: ethylene glycol, glycerol, low-molecular-weight polyethylene glycol, low-molecular-weight polylactic acid, sorbitol, citrate plasticizers such as acetyl tributyl citrate (ATBC), tributyl citrate (TBC) and triethyl citrate (TEC), epoxidized soybean oil, urea and mixtures thereof.

In one embodiment, the biodegradable polyester prepolymer results from condensation polymerization. The biodegradable polyester prepolymer results from condensation polymerization of a prepolymer having hydroxyl acid, diacid or diol as main chain and is selected from the group consisting of prepolymers containing one or more of polylactic acid (PLA), poly(butylenes succinate)(PBS), poly(butylene succinate-co-butylene adipate) (PBSA) and poly(butylene adipate-co-terephthalate) (PBAT) as main chain. The reaction activator is an epoxy group reaction activator, an anhydride group reaction activator, an isocyanate group reaction activator or an oxazolinyl reaction activator.

In one embodiment, the reaction activator is a reaction activator containing unsaturated double bonds. More preferably, the reaction activator containing unsaturated double bonds is a carbodiimide reaction activator containing unsaturated double bonds, an anhydride group reaction activator containing unsaturated double bonds or an isocyanate group reaction activator containing unsaturated double bonds. Most preferably, the reaction activator containing unsaturated double bonds is selected from dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol_P200 and Stabaxol-100 from Rhein Chemie, Germany, Stabaxol-I, maleic anhydride, glycidyl methacrylate, 1,6-cyclohexane didsocyanate, 4,4'-methylene bis(cyclohexyl isocyanate), lysine methyl ester diisocyanate, butane diisocyanate or combinations thereof.

In one embodiment, the epoxy group reaction activator comprises: an epoxy group-containing acrylate reaction activator, an epoxy group-containing glycidyl methacrylate reaction activator, an epoxy group-containing epoxidized soybean oil reaction activator or combinations thereof.

In one preferably embodiment, the epoxy group reaction activator is an oligomer or a prepolymer at least containing 3 epoxy groups/chain segments and having a molecular weight lower than 5000. A specific reaction activator is Joncry 1™ series products from BASF Corporation.

In one embodiment, the catalytic deactivator is a peroxide catalytic deactivator. Preferably, the catalytic deactivator is an organic peroxide catalytic deactivator. More preferably, the catalytic deactivator is selected from: azo peroxide, dialkyl peroxide, tert-butyl peroxybenzoate, di-tert-butyl peroxide, benzoyl peroxide, tert-butyl peroxyacetate, dicumyl peroxide, tert-butylperoxy-2-ethylhexyl carbonate or combinations thereof. The thermoplastic starch is prepared via the method below:
Biodegradable polyester monomer undergoes condensation polymerization and forms, together with the reaction activator, a biodegradable polymer prepolymer having an active terminal group;
The starch reacts with the active terminal group of the biodegradable polymer prepolymer to form a polyester-TPS graft copolymer; i.e. the thermoplastic starch.

In one embodiment, the thermoplastic starch (TPS) comprises: 20-80 parts of starch, 0.01-10 parts of reaction activator, 5-40 parts of polyester prepolymer carrier; 0.01-10 part of catalytic deactivator; and 5-50 parts of more than one plasticizer.

In the second aspect of the present invention, it provides a biodegradable polyester/starch composite material as defined in claim 7; the biodegradable polymer composite material comprises that:
(a) 5-80 parts of biodegradable polymer (in weight parts);
(b) the thermoplastic starch provided by the application; and
(c) 0.01-30 parts of auxiliary agents (in weight parts).

The auxiliary agents of the component (C) are additives and/or fillers.

In one embodiment, the biodegradable polymer of the component (a) is biodegradable polyester. In one embodiment, the biodegradable polymer is selected from aliphatic polyesters, aliphatic copolyesters, or aliphatic and aromatic copolyesters. More preferably, the biodegradable polymer is selected from polylactic acid (PLA), poly(butylenes succinate)(PBS), poly(butylene succinate-co-butylene adipate) (PBSA), poly(butylene adipate-co-terephthalate) (PBAT), polyethylene glycolic acid (PGA), poly(lactic-co-glycolic) acid (PLGA), polycaprolactone (PCL), poly(glycolic acid) (PGA) and polyvinyl alcohol (PVOH) or combinations thereof.

In the third aspect of the present invention, it provides a preparation method of the biodegradable polyester/starch composite material as defined in claim 10; the method comprises the steps:
Blend the biodegradable polymer and the thermoplastic starch at the presence of the auxiliary agents, and then carry out extrusion to obtain the finished biodegradable composite material.

In one embodiment, condensation polymerization of the biodegradable prepolymer is preferably carried out in a reactor, and the TPS and the finished composite material are processed in an extruder or a mixer, preferably in a co-rotating twin screw extruder.

In one embodiment, the condensation polymerization conditions of the biodegradable prepolymer are as follows: the temperature ranges from 80°C to 220°C, and reaction is at least carried out for 12 hours under a particular degree of vacuum. The processing temperature of the TPS ranges from 50°C to 150°C The extrusion temperature of the finished composite material ranges from 20°C to 220°C, preferably from 80°C to 200°C

### Detailed Description of the Embodiments

Upon extensive and deep researches, the inventor has acquired, by improving the preparation processes, a TPS with better quality and a finished composite material with better mechanical properties, better processability and excellent hydrolysis resistance.

The technical concept of the present invention is as follows:
The TPS in the present invention is featured by the fact that: the common high-molecular-weight polymer carrier is replaced by a biodegradable polyester prepolymer carrier, a graft copolymer is formed by a large amount of reactive terminal groups contained in the prepolymer and starch, this graft copolymer is capable of improving the compatibility between the carrier and the starch remarkably and achieving better dispersion of the starch, more moderate processing and preparation conditions and better TPS quality as well. Simultaneously, the graft copolymer also serves as a compatibilizer to further improve the compatibility among matrix components in preparation of the finished biodegradable composite material, so as to accomplish preparation of the composite material with high performances.

In addition, the biodegradable composite material is prepared via a three-step method in the present invention: the first step: condensation polymerization is carried out to prepare biodegradable polyester prepolymer, which contains a large amount of reactive terminal groups and is capable of biodegradation. The second step: prepare the novel thermoplastic starch (TPS), which is prepared on condition that the reactive polyester prepolymer serves as carrier, wherein the terminal groups are capable of reacting with the starch and the biodegradable polyester matrix used for preparation of the composite material to form the graft copolymer, thereby further improving the compatibility, mechanical properties and processability of the composite components. The polyester prepolymer results from direct condensation polymerization, has better mobility and lower molecular weight than the commonly-used prepolymer carriers, and is more suitable for preparation of the TPS so as to reach more homogeneous dispersion of the starch in the carrier, furthermore, this prepolymer also possesses more reactive terminal groups and forms the graft polymer or copolymer together with the TPS having a large amount of hydroxyls. The third step: some additives and fillers are blended with the biodegradable polyester and the TPS to prepare the finished biodegradable composite material, in this way, the property of full-biodegradation is ensured, besides, the presence of the TPS-polyester graft copolymer improves the compatibility among matrix components remarkably, resulting in homogeneous dispersion of the components, stable structure and excellent performances.

Detailed description will be made below to various aspects of the present invention:
Thermoplastic starch TPS and preparation method thereof

In the first aspect of the present invention, the application provides a thermoplastic starch. The thermoplastic starch (TPS) comprises (in weight parts):
20-80 parts of starch;
5-40 parts of biodegradable polyester prepolymer; the prepolymer has a molecular weight of 10,000-100,000 Daltons, a viscosity range of 0.30-1.2 dL/g, which is measured by Ubbelohde viscometer method, and a melting point range of 60-180°C; and the terminal reactive group content of the prepolymer is 1.0-20.0 meq/Kg, which is measured by terminal group titration process;
0.01-10 parts of reaction activator;
0.01-1.0 part of catalytic deactivator;
0.01-1.0 part of antioxidant; and
5-50 parts of auxiliary agents.

A method for preparation of a polyester prepolymer by condensation polymerization is further preferred in the present invention; monomers that are involved in condensation polymerization include: hydroxyl acid, diacid or diol and the reaction activator form a prepolymer containing polylactic acid (PLA) or poly(butylenes succinate)(PBS) or poly(butylene succinate-co-butylene adipate) (PBSA) or poly(butylene adipate-co-terephthalate) (PBAT) as main chain, and this prepolymer has a molecular weight not higher than 100,000 Daltons and a lot of terminal reactive groups. The polyester prepolymer is biodegradable and has a viscosity range of 0.30-1.2 dL/g(molecular weight=10,000-100,000 Daltons) and a melting point range of 60-180□.

The inventor has found that the thermoplastic starch (TPS) is prepared by taking the aforementioned biodegradable prepolymer as carrier (dispersant). The TPS polyester copolymer that exists in the carrier not only increases the stability of TPS, but also improves the compatibility and dispersion homogeneity of TPS, and the matrix component of the finished composite material, i.e. biodegradable polyester. Therefore, TPS has excellent processability and is also improved in the aspect of hydrolysis resistance. In the present invention, the ratio of TPS to prepolymer carrier is 1:1 to 5:1, allowing for addition of more starch to achieve better optimization of cost effectiveness. Simultaneously, this also leads to copolymer formation by a large amount of TPS and the carrier, so starch dispersion is improved and the mechanical properties of the resultant material are enhanced.

There are at least four added components below: catalytic deactivator, reaction activator, antioxidant and processing auxiliary agents. A better example of the additive, for example, contains peroxide (catalytic deactivator), epoxidation agent (reaction activator), glycerol (plasticizer in the processing auxiliary agents), phosphate (antioxidant), etc.

### Reaction Activator

In accordance with the present invention, the reaction activator is capable of reacting with carboxyl and hydroxyl terminal groups to form the TPS and polyester graft copolymer, thus the stability of matrix is enhanced. Therefore, the reaction activator is a reaction activator capable of reacting with carboxyl and hydroxyl terminal groups to form the TPS and/or polyester graft copolymer.

They may be epoxy group reaction activators, anhydride group reaction activators, isocyanate group reaction activators, oxazolinyl reaction activators or unsaturated double bond-containing activators, such as carbodiimide, etc.

In one embodiment, the reaction activator is an epoxy group reaction activator, an anhydride group reaction activator, an isocyanate group reaction activator or an oxazolinyl reaction activator.

In one embodiment, the reaction activator is a reaction activator containing unsaturated double bonds;
More preferably, the reaction activator containing unsaturated double bonds is a carbodiimide reaction activator containing unsaturated double bonds, an anhydride group reaction activator containing unsaturated double bonds or an isocyanate group reaction activator containing unsaturated double bonds.

Most preferably, the reaction activator containing unsaturated double bonds is selected from dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol-P200 and Stabaxol-100, Stabaxol-I, from Rhein Chemie, Germany, maleic anhydride, glycidyl methacrylate, 1,6-cyclohexane didsocyanate, 4,4'-methylene bis(cyclohexyl isocyanate), lysine methyl ester diisocyanate, butane diisocyanate or combinations thereof.

In one embodiment, the epoxy group reaction activator comprises: an epoxy group-containing acrylate reaction activator, an epoxy group-containing glycidyl methacrylate reaction activator, an epoxy group-containing epoxidized soybean oil reaction activator or combinations thereof.

In one preferably embodiment, the epoxy group reaction activator is an oligomer or a prepolymer at least containing 3 epoxy group/chain segments and having a molecular weight lower than 5,000. A specific reaction activator is Joncry 1™ series products from BASF Corporation.

The aforementioned reaction activator may react with the polyester prepolymer that is derived from condensation polymerization. The reactive groups in the reaction activator may also achieve bonding with starch to form the TPS-polyester graft copolymer.

### Catalytic Deactivator

In accordance with the present invention, any known peroxides are acceptable, preferably organic peroxides. the catalytic deactivator is selected from: azo peroxide, dialkyl peroxide, tert-butyl peroxybenzoate, di-tert-butyl peroxide, benzoyl peroxide, tert-butyl peroxyacetate, dicumyl peroxide, tert-butylperoxy-2-ethylhexyl carbonate or combinations thereof.

In the present invention, the amount of the catalytic deactivator used in the preparation process of TPS is typically from 0.01 parts to 10 parts (in weight parts), preferably from 0.05 parts to 1 part (corresponding to 20-80 parts of starch).

### Antioxidant

The antioxidant used in the present invention is a phosphite antioxidant, a hindered phenol antioxidant and a complex antioxidant of the both, including: trialkyl phosphite, mixed alkyl/aryl phosphate, alkyl aryl phosphate, sterically hindered aryl phosphate, aliphatic spirophosphite, sterically hindered diphosphonate, hydroxyphenyl propionate and mixtures thereof. and the primary commercial products are: antioxidant 1010, antioxidant 168, TNPP, Irgafosl68, Ultranox626, Cyanox2777, Irganox B, Irganox LC, IrganoxLM, IrganoxHP, IrganoxXP, Ultranox815A, Ultranox817A, Ultranox875A, Naugard900 and CyanoxXS4, etc.

### Starch

The starch used in the present invention has a water content of 5-10% (by total weight of the starch). Typically, TPS has a water content of 0.5-5%, preferably less than 2%, most preferably less than 1%.

### Auxiliary Agents

In the present invention, plasticizers are environment-friendly ones, including glycerol, ethylene glycol, low-molecular-weight polylactic acid, low-molecular-weight polyethylene glycol, sorbitol, acetyl tributyl citrate (ATBC), tributyl citrate (TBC), triethyl citrate (TEC), epoxidized soybean oil, urea and mixtures thereof.

### Biodegradable Polyester Prepolymer

In one embodiment, the biodegradable polyester prepolymer results from condensation polymerization;
Preferably, the biodegradable polyester prepolymer results from condensation polymerization of a prepolymer having hydroxyl acid, diacid or diol as main chain. Most preferably, the biodegradable polyester prepolymer is selected from the group consisting of prepolymers containing one or more of polylactic acid (PLA), poly(butylenes succinate)(PBS), poly(butylene succinate-co-butylene adipate) (PBSA) and poly(butylene adipate-co-terephthalate) (PBAT) as main chain.

The prepolymer has a molecular weight of 10,000-100,000 Daltons, a viscosity range of 0.30-1.2 dL/g, which is measured by an Ubbelohde viscometer method, and a melting point range of 60-180°C; and the terminal reactive group content of the prepolymer is 1.0-20.0 meq/Kg, which is measured by an terminal group titration process. The inventor has found that the thermoplastic starch (TPS) is prepared under moderate conditions by using this low-viscosity prepolymer as carrier. The above thermoplastic starch lays a foundation for biodegradable composite materials, and not only keeps a high molecular weight and good hydrolysis resistance, but also has better mechanical properties. Moreover, a set of preparation process of the corresponding biodegradable composite material is formed.

### Preparation of TPS

In the process of the present invention, the components for preparation of TPS, for example, comprises: 20-80 parts of starch, 0.01-10 parts of reaction activator, 5-40 parts of polyester prepolymer carrier; 0.01-10 part of catalytic deactivator; and 5-50 parts of more than one plasticizer. A processing temperature ranges from 50°C to 150°C.

The thermoplastic starch is prepared via the method below:
Biodegradable polyester monomer undergoes condensation polymerization and forms, together with the reaction activator, a biodegradable polymer prepolymer having an active terminal group; and
The starch reacts with the active terminal group of the biodegradable polymer prepolymer to form a polyester-TPS graft copolymer; i.e. the thermoplastic starch.

In one embodiment, the condensation polymerization conditions of the biodegradable prepolymer are as follows: the temperature ranges from 80°C to 220°C, and reaction is at least carried out for 12 hours under a particular degree of vacuum. The processing temperature of the TPS ranges from 50°C to 150°C. The extrusion temperature of the finished composite material ranges from 20°C to 220°C, preferably from 80°C to 200°C

### Composite Material

The matrix for final preparation of the biodegradable composite material is selected from the group consisting of the following biodegradable polyesters (including, but not limited to): aliphatic polyesters, aliphatic copolyesters, aliphatic/aromatic copolyesters, etc. The typical biodegradable polyesters are polylactic acid (PLA), poly(butylenes succinate)(PBS), poly(butylene succinate-co-butylene adipate) (PBSA), poly(butylene adipate-co-terephthalate) (PBAT), polyhydroxyalkanoates (PHAs), polyethylene glycolic acid (PGA), poly(lactic-co-glycolic) acid (PLGA), polycaprolactone (PCL), poly(glycolic acid) (PGA), polyvinyl alcohol (PVOH), etc.

In accordance with the present invention, the biodegradable polyester/starch composite material is prepared using a special process in which water addition is not involved, so degradation of the starch and the polyester matrix is reduced. In this composite material, there are 5-80 parts of biodegradable polyester, 30-80 parts of TPS and 0.01-30 parts of other additives and fillers, and the blending temperature ranges from 50°C to 200°C

The additives and fillers used in the present invention may be common ones at present, including: inorganic filler, organic filler, flame retardant, pigment, foaming agent, processing auxiliary agent, etc. One or more additives may be selected, and the addition amount is 0∼30% of the total amount.

The biodegradable composite material in the present invention can be applied to manufacturing of films, sheets, injection molding, profiles, containers, etc.

The processing procedure is completed in an extruder or a mixer, preferably in a twin screw extruder, and most preferably in a co-rotating twin screw extruder.

The extrusion temperature of the finished composite material ranges from 20°C to 220°C, preferably from 80°C to 200°C

In accordance with the technology of the present invention, the prepared biodegradable polyester/starch composite material has the advantages that:
1) Raw materials like polyesters, starch and additives are completely biodegradable or identical to soil components, without imparting any negative effects upon environment.
2) A new method for preparation of TPS by a prepolymer having active terminal group polyester is adopted.
3) Starch is processed under more moderate conditions since the low-viscosity prepolymer serves as carrier, and the prepared TPS has superior processability and excellent dispersibility.
4) The prepared composite material is good in stability and excellent in mechanical properties. This is because the starch/polyester prepolymer-formed graft copolymer improves the compatibility among the final polyester/starch components.
5) Its cost effectiveness is more competitive, and the reason for that is addition of more inexpensive bio-based starch.

Unless specifically stated, the various raw materials in the present invention can all be commercially available, or prepared according to conventional methods in this art. Unless otherwise defined or stated, all professional and scientific terms employed herein are identical to the meanings with which those skilled in this art are familiar. In addition, any methods or materials similar or equivalent to the contents documented could all be applied to the method of the present invention.

Other aspects of the present invention will become readily apparent to those skilled in this art owing to the disclosure herein.

The present invention will be further illustrated below in conjunction with specific examples. It shall be understood that, these examples are for illustrative purposes only, not limitative to the scope of the present invention. In the examples below, measurements in the experimental methods with specific conditions unspecified are typically performed in accordance with national standards. In case of absence of the respective national standards, measurements are performed in accordance with general international standards and general conditions or with conditions suggested by manufacturers. Unless otherwise stated, all the parts are by weight and all the percents are by weight.

Unless otherwise defined or stated, all professional and scientific terms employed herein are identical to the meanings with which those skilled in this art are familiar. In addition, any methods or materials similar or equivalent to the contents documented could all be applied to the method of the present invention.

Reference could be made to the examples below in detailed description of the present invention. These examples are for a better understanding of the inventive contents only, not limitative to the technical scope covered by the present invention. Unless otherwise specified, both the parts and the percents in the examples are by weight. Sample preparation and test are based upon the corresponding ASTM test analysis.

### [Example 1]

Direct preparation of the biodegradable polyester prepolymer having active functional groups by condensation polymerization

16.4kg of 1,4-butanediol (99%), 17.7kg of succinic acid and 4.3kg of adipic acid are added to a 50L reactor with heating and stirring reactors and mixed, and 194.0g of tetrabutyl titanate (99%) is then added as reaction catalyst. The mixing reaction temperature is set as 120°C, this temperature rises to 180°Cat a rate of 30°C/hour and kept for 5 hours at every temperature point, and stirring is maintained at the same time. During temperature rise, a vacuum system is switched on to reduce the degree of vacuum to 50mbar at a rate of 100mbar/hour. Then, temperature rises to 220°C and is kept for 5 hours. After that, vacuum release is carried out, and 963.0g of commercially-available model ADR 4368C is added to the reactor through a side feeding port in order to react with the prepolymer for 30 minutes. The finished product is extruded by a co-rotating twin screw extruder, cooled and granulated. The typical extrusion temperature is: 80-150°C, the rotating speed of the screws is 120rpm. The active prepolymer product is pale yellow and has a reduced viscosity of 0.82dl/g, a molecular weight of 51,000 Daltons and a melting point of 96°C.

### [Example 2]

### Preparation of the thermoplastic starch (TPS) by prepolymer

12.0kg of corn starch, 4.0kg of glycerol, 2.06kg of biodegradable polyester prepolymer (which is prepared in the Example 1), 400g of urea, 1.0kg of talcum powder, 600g calcium stearate and 10.0g of benzoyl peroxide are mixed in a high-speed mixer at first, and then, the resultant TPS is extruded by a co-rotating twin screw extruder. The typical extrusion-grade temperature for preparation of the TPS is set within a range from 60°C to 140°C, and the rotating speed of the screws is 150rpm. The extruded TPS strips are cooled via conveyor belts and wind, and then granulated for future use.

### [Example 3]

### Preparation of the biodegradable polyester/thermoplastic starch composite material

10.0kg of TPS (which is prepared in the Example 2) and 5.0kg of Bionolle 3001 PBSA (poly(butylene succinate-co-butylene adipate)) are mixed in a high-speed mixer, and then, in a twin screw extruder, the resultant product is extruded and granulated to obtain the finished material. The typical extrusion temperature is 60°C to 150°C. Sample preparation and test analysis are carried out as required by ASTM.

### [Example 4]

### Preparation of the biodegradable polyester/thermoplastic starch composite material

10.0kg of TPS (which is prepared in the Example 2), 3.0kg of Bionolle 3001 PBSA (poly(butylene succinate-co-butylene adipate)) and 2.0kg of Natureworks 3051D PLA are mixed in a high-speed mixer, and then, in a twin screw extruder, the resultant product is extruded and granulated to obtain the finished material. The typical extrusion temperature is 80°C to 180°C Sample preparation and test analysis are carried out as required by ASTM.

### [Comparative Example 5]

### Direct preparation of the thermoplastic starch (TPS) by biodegradable polyester

12.0kg of corn starch, 4.0kg of glycerol, 2.0kg of Bionolle 3001 PBSA (poly(butylene succinate-co-butylene adipate)), 400g of urea, 1.0kg of talcum powder, 600g calcium stearate and 10.0g of benzoyl peroxide are mixed in a high-speed mixer at first, and then, the resultant TPS is extruded by a co-rotating twin screw extruder. The typical extrusion-grade temperature for preparation of the TPS is set within a range from 80°C to 180°C, and the rotating speed of the screws is 150rpm. The extruded TPS strips are cooled via conveyor belts and wind, and then granulated for future use.

### [Comparative Example 6]

### Preparation of the biodegradable polyester/thermoplastic starch composite material

10.0kg of TPS (which is prepared in the Example 5) and 5.0kg of Bionolle 3001 PBSA (poly(butylene succinate-co-butylene adipate)) are mixed in a high-speed mixer, and then, in a twin screw extruder, the resultant product is extruded and granulated to obtain the finished material. The typical extrusion temperature is 80°C to 180°C. Sample preparation and test analysis are carried out as required by ASTM.

### [Comparative Example 7]

### Preparation of the biodegradable polyester/thermoplastic starch composite material

10.0kg of TPS (which is prepared in the Example 5), 3.0kg of Bionolle 3001 PBSA (poly(butylene succinate-co-butylene adipate)) and 2.0kg of Natureworks 3051D PLA are mixed in a high-speed mixer, and then, in a twin screw extruder, the resultant product is extruded and granulated to obtain the finished material. The typical extrusion temperature is 80°C to 200°C Sample preparation and test analysis are carried out as required by ASTM.

In accordance with the ASTM requirements, test analysis is performed on the samples of these 7 examples above, and results are shown in Table 1 below.

| Example Number | 2 | 3 | 4 | 5 | 6 | 7 |
|---|---|---|---|---|---|---|
| | TPS1 | CM1 | CM2 | TPS2 | CM3 | CM4 |
| PBSA(poly(butylene succinate-co-butylene adipate))prepolymer | 2.06 | 1.03 | 1.03 | - | - | - |
| Corn starch | 12.00 | 6.00 | 6.00 | 12.00 | 6.00 | 6.00 |
| Glycerol | 4.00 | 2.00 | 2.00 | 4.00 | 2.00 | 2.00 |
| Urea | 0.40 | 0.20 | 0.20 | 0.40 | 0.20 | 0.20 |
| Talcum powder | 1.00 | 0.50 | 0.50 | 1.00 | 0.50 | 0.50 |
| Calcium stearate | 0.60 | 0.30 | 0.30 | 0.60 | 0.30 | 0.30 |
| Benzoyl peroxide | 0.01 | 0.005 | 0.005 | 0.01 | 0.005 | 0.005 |
| Bionolle 3001 PBSA | - | 5.00 | 3.00 | 2.00 | 6.00 | 4.00 |
| Natureworks 3051D PLA | - | - | 2.00 | - | - | 2.00 |
| Melt index (g/10min,165°C, 5kg) | 6.30 | 4.12 | 3.55 | 3.80 | 2.93 | 2.50 |
| Tensile strength | 12.0 | 36.2 | 32.4 | 10.8 | 24.6 | 27.3 |
| Elongation (%) | 125.4 | 83.1 | 43.5 | 82.8 | 67.2 | 38.9 |
| Izod un-notched impact strength (KJ/m²) | 11.0 | NB | NB | 6.5 | 74.6 | 38.1 |
| Processability | High, pale yellow | High | High | Low, yellow | Low | Low |
| Melt surface | Smooth, few bubbles | Smooth | Smooth | Rugged, many bubbles | A few protrusio ns | A lot of protrusio ns |
| Phase morphology | Homogen eous | Homogen eous | Homogen eous | Large particle | Large particle | Large particle |

## Claims

1. A thermoplastic starch, **characterized in that** the thermoplastic starch (TPS) comprises (in weight parts):
20-80 parts of starch;
5-40 parts of biodegradable polyester prepolymer; the biodegradable polyester prepolymer has a molecular weight of 10,000-100,000 Daltons, a viscosity range of 0.30-1.2 dL/g, which is measured by Ubbelohde viscometer method, and a melting point range of 60-180°C; and the terminal reactive group content of the biodegradable polyester prepolymer is 1.0-20.0 meq/Kg, which is measured by a terminal group titration process;
0.01-10 parts of reaction activator;
0.01-1.0 part of catalytic deactivator;
0.01-1.0 part of antioxidant; and
5-50 parts of plasticizers;
the thermoplastic starch is prepared via the below method:
biodegradable polyester monomer undergoes condensation polymerization and forms, together with the reaction activator, a biodegradable polymer prepolymer having an active terminal group; and
the starch reacts with the active terminal group of the biodegradable polymer prepolymer having an active terminal group to form a polyester-TPS graft copolymer, that is, the thermoplastic starch;
the biodegradable polyester monomers that are involved in condensation polymerization include: hydroxyl acid, diacid or diol;
the biodegradable polymer prepolymer having an active terminal group is selected from the group consisting of prepolymers containing one or more of polylactic acid (PLA), poly(butylenes succinate)(PBS), poly(butylene succinate-co-butylene adipate) (PBSA) and poly(butylene adipate-co-terephthalate) (PBAT) as main chain;
the reaction activator is an epoxy group reaction activator, a carbodiimide reaction activator containing unsaturated double bonds, an anhydride group reaction activator containing unsaturated double bonds, an isocyanate group reaction activator containing unsaturated double bonds or an oxazolinyl reaction activator.

2. The thermoplastic starch according to claim 1, wherein the reaction activator is selected from dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol-P200 and Stabaxol-100, Stabaxol-I, from Rhein Chemie, Germany, maleic anhydride, glycidyl methacrylate, 1,6-cyclohexane diisocyanate 4,4'-methylene bis(cyclohexyl isocyanate), lysine methyl ester diisocyanate, butane diisocyanate or combinations thereof.

3. The thermoplastic starch according to claim 1, wherein the epoxy group reaction activator comprises: an epoxy group-containing acrylate reaction activator, an epoxy group-containing glycidyl methacrylate reaction activator, an epoxy group-containing epoxidized soybean oil reaction activator or combinations thereof.

4. The thermoplastic starch according to claim 3, wherein the epoxy group reaction activator is an oligomer or a prepolymer at least containing 3 epoxy groups/chain segments and having a molecular weight lower than 5000.

5. The thermoplastic starch according to claim 1, wherein the catalytic deactivator is an organic peroxide catalytic deactivator.

6. The thermoplastic starch according to claim 5, wherein the catalytic deactivator is selected from: azo peroxide, dialkyl peroxide, tert-butyl peroxybenzoate, di-tert-butyl peroxide, benzoyl peroxide, tert-butyl peroxyacetate, dicumyl peroxide, tert-butylperoxy-2-ethylhexyl carbonate or combinations thereof.

7. A biodegradable polyester/starch composite material, wherein the biodegradable polyester/starch composite material comprises:
(a) 5-80 parts of biodegradable polymer (in weight parts);
(b) the thermoplastic starch according to claim 1; and
(c) 0.01-30 parts of auxiliary agents (in weight parts).

8. The biodegradable polyester/starch composite material according to claim 7, wherein the biodegradable polymer of the component (a) is selected from aliphatic polyesters, aliphatic copolyesters, or aliphatic and aromatic copolyesters.

9. The biodegradable polyester/starch composite material according to claim 8, wherein the biodegradable polymer is selected from polylactic acid (PLA), poly(butylenes succinate)(PBS), poly(butylene succinate-co-butylene adipate) (PBSA), poly(butylene adipate-co-terephthalate) (PBAT), polyethylene glycolic acid (PGA), poly(lactic-co-glycolic) acid (PLGA), polycaprolactone (PCL), poly(glycolic acid) (PGA) and polyvinyl alcohol (PVOH) or combinations thereof.

10. A preparation method of the biodegradable polyester/starch composite material according to claim 7, wherein the method comprises the step:
blend the biodegradable polymer and the thermoplastic starch in the presence of the auxiliary agents, and then carry out extrusion to obtain the finished biodegradable composite material.

## Patentansprüche

1. Thermoplastische Stärke, **dadurch gekennzeichnet, dass** die thermoplastische Stärke (TPS) umfasst (in Gewichtsanteilen):
20 - 80 Teile Stärke,
5 - 40 Teile biologisch abbaubares Polyester-Prepolymer, wobei das biologisch abbaubare Polyester-Prepolymer ein Molekulargewicht von 10.000 - 100.000 Dalton aufweist, eine Viskosität im Bereich von 0,30 - 1,2 dl/g, die mit dem Ubbelohde-Viskosimeter-Verfahren gemessen wird, und einen Schmelzpunkt im Bereich von 60 - 180 °C, und wobei der Gehalt des biologisch abbaubaren Polyester-Prepolymers an terminalen reaktiven Gruppen 1,0 - 20,0 meq/kg beträgt, was durch einen Titrationsprozess für terminale Gruppen gemessen wird,
0,01 - 10 Teile Reaktionsaktivator,
0,01 - 1,0 Teil katalytischer Deaktivator,
0,01 - 1,0 Teil Antioxidans, und
5 - 50 Teile Weichmacher,
wobei die thermoplastische Stärke durch das folgende Verfahren hergestellt wird:
biologisch abbaubares Polyestermonomer durchläuft eine Kondensationspolymerisation und bildet zusammen mit dem Reaktionsaktivator ein biologisch abbaubares Polymer-Prepolymer mit einer aktiven terminalen Gruppe, und
die Stärke reagiert mit der aktiven terminalen Gruppe des biologisch abbaubaren Polymer-Prepolymers mit einer aktiven terminalen Gruppe und bildet ein Polyester-TPS-Pfropfcopolymer, das heißt die thermoplastische Stärke,
wobei die biologisch abbaubaren Polyestermonomere, die an der Kondensationspolymerisation beteiligt sind, umfassen: Hydroxylsäure, Disäure oder Diol,
wobei das biologisch abbaubare Polymer-Prepolymer mit einer aktiven terminalen Gruppe ausgewählt ist aus der Gruppe bestehend aus Prepolymeren, die eines oder mehrere der folgenden als Hauptkette enthalten: Polymilchsäure (PLA), Poly(butylensuccinat) (PBS), Poly(butylensuccinat-co-butylenadipat) (PBSA), und Poly(butylenadipat-co-terephthalat) (PBAT),
wobei der Reaktionsaktivator ein Reaktionsaktivator mit Epoxidgruppen ist, ein Carbodiimid-Reaktionsaktivator, der ungesättigte Doppelbindungen enthält, ein Reaktionsaktivator mit Anhydridgruppen, der ungesättigte Doppelbindungen enthält, ein Reaktionsaktivator mit Isocyanatgruppen, der ungesättigte Doppelbindungen enthält, oder ein Oxazolinyl-Reaktionsaktivator.

2. Thermoplastische Stärke nach Anspruch 1, wobei der Reaktionsaktivator ausgewählt ist aus Dicyclohexylcarbodiimid, Diisopropylcarbodiimid, Bis(2,6-diisopropylphenyl)carbodiimid, 1-Ethyl-(3-dimethylaminopropyl)carbodiimid-hydrochlorid, Stabaxol-P, Stabaxol-P200 und Stabaxol-100, Stabaxol-I, von Rhein Chemie Deutschland, Maleinsäureanhydrid, Glycidylmethacrylat, 1,6-Cyclohexandiisocyanat, 4,4'-Methylen-bis(cyclohexylisocyanat), Lysinmethylesterdiisocyanat, Butandiisocyanat oder Kombinationen dieser.

3. Thermoplastische Stärke nach Anspruch 1, wobei der Reaktionsaktivator mit Epoxidgruppen umfasst: einen Epoxidgruppen enthaltenden Acrylat-Reaktionsaktivator, einen Epoxidgruppen enthaltenden Glycidylmethacrylat-Reaktionsaktivator, einen Epoxidgruppen enthaltenden epoxidierten Sojabohnenöl-Reaktionsaktivator oder Kombinationen dieser.

4. Thermoplastische Stärke nach Anspruch 3, wobei der Reaktionsaktivator mit Epoxidgruppen ein Oligomer oder ein Prepolymer ist, das mindestens 3 Epoxidgruppen/Kettensegmente enthält und ein Molekulargewicht von weniger als 5000 aufweist.

5. Thermoplastische Stärke nach Anspruch 1, wobei der katalytische Deaktivator ein katalytischer Deaktivator mit organischem Peroxid ist.

6. Thermoplastische Stärke nach Anspruch 5, wobei der katalytische Deaktivator ausgewählt ist aus: Azoperoxid, Dialkylperoxid, tert-Butylperoxybenzoat, Di-tert-butylperoxid, Benzoylperoxid, tert-Butylperoxyacetat, Dicumylperoxid, tert-Butylperoxy-2-ethylhexylcarbonat oder Kombinationen dieser.

7. Biologisch abbaubares Polyester/Stärke-Verbundmaterial, wobei das biologisch abbaubare Polyester/Stärke-Verbundmaterial umfasst:
(a) 5 - 80 Teile biologisch abbaubares Polymer (in Gewichtsanteilen),
(b) die thermoplastische Stärke nach Anspruch 1 und
(c) 0,01 - 30 Teile Hilfsmittel (in Gewichtsanteilen).

8. Biologisch abbaubares Polyester/Stärke-Verbundmaterial nach Anspruch 7, wobei das biologisch abbaubare Polymer der Komponente (a) ausgewählt ist aus aliphatischen Polyestern, aliphatischen Copolyestern oder aliphatischen und aromatischen Copolyestern.

9. Biologisch abbaubares Polyester/Stärke-Verbundmaterial nach Anspruch 8, wobei das biologisch abbaubare Polymer ausgewählt ist aus Polymilchsäure (PLA), Poly(butylensuccinat) (PBS), Poly(butylensuccinat-co-butylenadipat) (PBSA), Poly(butylenadipat-co-terephthalat) (PBAT), Polyethylenglykolsäure (PGA), Poly(milch-co-glycol)säure (PLGA), Polycaprolacton (PCL), Poly(glycolsäure) (PGA) und Polyvinylalkohol (PVOH) oder Kombinationen dieser.

10. Herstellungsverfahren für das biologisch abbaubare Polyester/Stärke-Verbundmaterial nach Anspruch 7, wobei das Verfahren den folgenden Schritt umfasst:
Mischen des biologisch abbaubaren Polymers und der thermoplastischen Stärke in Gegenwart der Hilfsmittel und danach Ausführen einer Extrusion, um das fertige biologisch abbaubare Verbundmaterial zu erhalten.

## Revendications

1. Amidon thermoplastique,
**caractérisé en ce que**
cet amidon thermoplastique (TPS) renferme en parties pondérales :
20-80 parties d'amidon,
5-40 parties d'un prépolymère de polyester biodégradable, ce prépolymère de polyester biodégradable ayant un poids moléculaire de 10.000 à 100.000 Daltons, une de viscosité située dans la plage de 0,30-1,2 dL/g, mesurée par la méthode du viscomètre de Ubbelohde, et une température de fusion située dans la plage de 60 à 180°C, et la teneur en groupes réactifs terminaux du prépolymère de polyester biodégradable étant de 1,0 à 20,0 meq/Kg mesurée par un procédé de titrage des groupes terminaux,
0,01-10 parties d'activateur de réaction,
0,01-1.0 parties de désactivateur catalytique,
0,1-1,0 parties d'antioxydant, et
5-50 parties de plastifiants,
l'amidon thermoplastique étant préparé par le procédé suivant :
un monomère de polyester biodégradable est soumis à une polymérisation par condensation, et forme, avec l'activateur de réaction, un prépolymère de polymère biodégradable ayant un groupe terminal actif,
l'amidon réagit avec le groupe terminal actif du prépolymère de polymère biodégradable ayant un groupe terminal actif pour former un copolymère greffé polyester-TPS qui correspond à l'amidon thermoplastique,
les monomères de polyester biodégradable qui sont impliqués dans la polymérisation par condensation renferment un acide hydroxylique, un diacide ou un diol,
le prépolymère de polymère biodégradable ayant un groupe terminal actif est choisi dans le groupe formé par des prépolymères renfermant au moins l'un des composés suivants : acide polylactique (PLA), po-ly(butylène succinate) (PBS), poly(butylène succinate co-butylène adipate) (PBSA) et poly(butylène adipate co-téréphtalate) (PBAT) en tant que chaîne principale,
l'activateur de réaction est un activateur de réaction à groupe époxy, un activateur de réaction de type carbodiimide renfermant des doubles liaisons insaturées, un activateur de réaction à groupe anhydride renfermant des doubles liaisons insaturées, un activateur de réaction à groupe isocyanate renfermant des doubles liaisons insaturées, ou un activateur de réaction de type oxazolinyl.

2. Amidon thermoplastique conforme à la revendication 1,
dans lequel l'activateur de réaction est choisi dans le groupe formé par les composés suivants : dicyclohexyl carbodiimide, diisopropyl carbodiimide, bis (2,6-diisoppropylphényl) carbodiimide, hydrochlorure de 1-ethyl-(3-dimethylaminopropyl)-carbodiimide, Stabaxol-P, Stabaxol-P200 et Stabaxol-100, Stabaxol-I, de Rhein Chemie, Germany, anhydride maleique, glycidyl méthacrylate, 1-6-cyclohexane diisocyanate, 4, 4' méthylène bis (cyclohexyl isocyanate), lysine méthyl ester diisocyanate, butane diisocyanate ou leurs combinaisons.

3. Amidon thermoplastique conforme à la revendication 1,
dans lequel l'activateur de réaction à groupe époxy renferme un activateur de réaction de type acrylate renfermant un groupe époxy, un activateur de réaction de type glycidyl méthacrylate renfermant un groupe époxy, un activateur de réaction de type d'huile de soja époxydée renfermant un groupe époxy ou des combinaisons de ces composés.

4. Amidon thermoplastique conforme à la revendication 3,
dans lequel l'activateur de réaction à groupe époxy est un oligomère ou un prépolymère renfermant au moins trois groupe époxy/segments de chaine juet ayant un poids moléculaire inférieur à 5000.

5. Amidon thermoplastique conforme à la revendication 1,
dans lequel le désactivateur catalytique est un désactivateur catalytique de type peroxyde organique.

6. Amidon thermoplastique conforme à la revendication 5,
dans lequel le désactivateur catalytique est choisi parmi les composés suivants : azo peroxyde, dialkyl peroxyde, tert-butyl, peroxybenzoate, di-tert butyl péroxyde, benzoyl peroxyde, tert-butyl peroxy acétate, dicumyl péroxyde, tert-butyl peroxy-2- éthylhexyl carbonate ou des combinaisons de ces composés.

7. Matériau composite polyester biodégradable/amidon renferment :
(a) 5-80 parties de polymère biodégradable (en partie pondérales),
(b) un amidon thermoplastique conforme à la revendication 1 et,
(c) 0,01-30 parties d'agents auxiliaires (en partie pondérales).

8. Matériau composite polyester biodégradable/amidon conforme à la revendication 7,
dans lequel le polymère biodégradable du composant (a) est choisi parmi des polyesters aliphatiques, des copolyesters aliphatiques ou des copolyesters aliphatiques et aromatiques.

9. Matériau composite polyester biodégradable/amidon conforme à la revendication 8,
dans lequel le polymère biodégradable est choisi parmi les composés suivants : acide polylactique (PLA), poly(butylène succinate) (PBS), po-ly(butylène succinate-co-butylène adipate) (PBSA), poly(butylène adipate-co-terephthalate) (PBAT), acide polyéthylène glycolique (PGA), acide poly(lactique-co-glycolique) (PLGA), polycaprolactone (PCL), acide poly (glycolique (PGA) et alcool polyvinylique (PVOH) ou des combinaisons de ces composés.

10. Procédé de préparation d'un matériau composite polyester biodégradable/amidon conforme à la revendication 7, comprenant une étape consistant à mélanger le polymère biodégradable et l'amidon thermoplastique en présence des agents auxiliaires puis à effectuer une extrusion pour obtenir le matériau composite biodégradable final.
